# EUROPÄISCHE PATENTSCHRIFT

(11) **EP 1 531 082 B1**
(45) Veröffentlichungstag und Bekanntmachung des Hinweises auf die Patenterteilung: **23.04.2008**
(21) Anmeldenummer: 04104580.8
(22) Anmeldetag: 22.09.2004
(51) Int. Cl.: B60Q 1/48, G08G 1/16

(54) **Verfahren zum Bereitstellen von Informationen zum Einparken eines Fahrzeuges in eine Parklücke**
Method for providing information for parking a vehicle in a parking space
Procéde pour fournir des informations pour garer une voiture dans un espace libre

(30) Priorität: 11.11.2003 DE 10352506
(43) Veröffentlichungstag der Anmeldung: 18.05.2005
(73) Patentinhaber: ROBERT BOSCH GMBH, 70442 Stuttgart (DE)
(72) Erfinder: Hess, Steffen, 74343 Sachsenheim (DE); Egelhaaf, Jan, 71229 Leonberg (DE); Belfroid-Van Der Put, Joline, 71229 Leonberg (DE); Guelzow, Thomas, 70825 Korntal-Muenchingen (DE)

(56) Entgegenhaltungen:
- EP-A- 0 835 796
- PATENT ABSTRACTS OF JAPAN Bd. 2002, Nr. 04, 4. August 2002 (2002-08-04) -& JP 2001 344699 A (YAZAKI CORP), 14. Dezember 2001 (2001-12-14)
- PATENT ABSTRACTS OF JAPAN Bd. 2000, Nr. 06, 22. September 2000 (2000-09-22) -& JP 2000 072019 A (TOYOTA MOTOR CORP), 7. März 2000 (2000-03-07)

## Beschreibung

### Technisches Gebiet

Die Erfindung betrifft ein Verfahren zum Bereitstellen von Informationen zum Einparken gemäß dem Oberbegriff des Anspruchs 1.

### Stand der Technik

Die zunehmende Verkehrsdichte und verstärkte Bebauung freier Flächen engen den Verkehrsraum, insbesondere in Ballungszentren, kontinuierlich ein. Der zur Verfügung stehende Parkraum wird enger und die Suche nach einer geeigneten Parklücke belastet den Fahrer zusätzlich zum stetig steigenden Verkehrsaufkommen. Insbesondere beim rückwärtigen Einparken in eine Parklücke, ist es oft mit erheblichen Schwierigkeiten verbunden, die genaue Größe und Lage der Parklücke beziehungsweise die Lage der die Parklücke begrenzenden Hindernisse richtig einzuschätzen.

Zur Entlastung des Führers eines Fahrzeuges beim Einparken sind unterschiedlichste Verfahren und Vorrichtungen, wie zum Beispiel eine Parklückenvermessung oder ein semiautonomer oder ein vollautonomer Parkassistent, bekannt.

Um den Fahrer in geeigneter Weise über den Abstand seines Fahrzeuges zu in der Fahrzeugumgebung befindlichen Hindernissen zu informieren, ist die Verwendung akustischer, optischer oder haptischer Signale bekannt.

So ist es beispielsweise aus DE 101 36 410 A1 bekannt, mittels einer Anzeigeeinheit die Zielparkposition, die gegenwärtige Fahrzeugposition und die erwartete Parkposition optisch darzustellen. Nachteilig an der vorgenannten Vorrichtung beziehungsweise am vorgenannten Verfahren ist, dass der Fahrzeugführer die ihm zur Verfügung gestellten Informationen über die gegenwärtige Fahrzeugposition und Zielparkposition sowie die erwartete Parkposition zunächst auf die realen Verhältnisse übertragen muss, um hieraus eine Entscheidung darüber fällen zu können, wie weit er das Fahrzeug fahren beziehungsweise wann er das Fahrzeug abbremsen oder umlenken muss. Dieser Vorgang erfordert einige Konzentration, wodurch die Aufmerksamkeit des Fahrzeugführers bezüglich des Straßenverkehrsgeschehens nachteilhafterweise verringert wird. Zudem wird es insbesondere für Fahrzeugführer, welche mit dem in DE 101 36 410 A1 beschriebenen Verfahren nicht vertraut sind, notwendig sein, sich an die mit der Anzeigevorrichtung dargestellten Informationen zu gewöhnen, um aus diesen die notwendigen Informationen über das reale Verkehrsgeschehen zu erhalten.

Aus der EP 0 835 796 A2 ist ein automatisches Lenksystem für Fahrzeuge bekannt, mittels dem ein gewünschter Einpark-Modus ausgewählt wird und das Fahrzeug sich langsam bei einem gedrückten Bremspedal entlang einer ermittelten Fahrtroute fortbewegen kann. Die aktuelle Einparksituation einschließlich einer Einparktrajektorie kann dabei in einer Anzeige im Fahrzeug dem Fahrer dargestellt werden.

### Darstellung der Erfindung, Aufgabe, Lösung, Vorteile

Es ist daher Aufgabe der vorliegenden Erfindung, ein Verfahren zum Bereitstellen von Informationen für einen Fahrzeugführer zum Einparken anzugeben, mittels welchem der Fahrzeugführer besonders schnell und in besonders intuitiver Weise über die Parksituation, insbesondere über die Lage vorhandener Hindernisse informiert wird. Hierbei soll die Ablenkung des Fahrzeugführers vom Straßenverkehrsgeschehen möglichst gering gehalten werden.

Diese Aufgabe wird gelöst durch ein Verfahren mit den im kennzeichnenden Teil des Anspruchs 1 genannten Merkmalen im Zusammenwirken mit den Merkmalen im Oberbegriff. Bevorzugte Ausgestaltungen sind in den Unteransprüchen enthalten.

Dadurch, dass während der Detektion von Hindernissen das Fahrzeug und dessen Position in Relation zu bereits detektierten Hindernissen auf einem dem Fahrer zugeordneten Display dargestellt wird, wobei das Verhältnis von Fahrzeuglänge zum Abstand des Fahrzeuges zu einem Hindernis dem Verhältnis der dargestellten Fahrzeuglänge zum dargestellten Abstand des dargestellten Fahrzeuges zum dargestellten Hindernis entspricht oder im Wesentlichen entspricht, erhält der Fahrzeugführer optische Informationen über die Einparksituationen, welche er sehr schnell und sehr einfach verarbeiten kann und welche der realen Einparksituation entspricht. Hierdurch kann der Fahrzeugführer, auch wenn er (noch) keine oder wenig Erfahrung mit dem Fahrzeug hat und deswegen dessen Größe schwierig einzuschätzen vermag, aus den ihm zur Verfügung gestellten Informationen schnell auf die realen Größen und Abstandsverhältnisse zu vorhandenen Hindernissen schließen, ohne dazu notwendigerweise seinen Kopf in Rückwärtsrichtung des Fahrzeuges zu bewegen. Hierdurch wird eine Ablenkung des Fahrzeugführers vom Straßenverkehr weitgehend ausgeschlossen.

Vorzugsweise wird das Fahrzeug und der vordefinierte Messbereich der dem Fahrzeug zugeordneten Sensoren sowie bereits detektierte Hindernisse in einer senkrechten Aufsicht dargestellt. Dabei ist vorgesehen, dass die tatsächliche Fahrtrichtung (abhängig vom eingelegten Gang (Vorwärts- oder Rückwärtsgang)) und/oder die tatsächliche Rollrichtung des Fahrzeuges, die z.B. durch Radsensoren an den Reifen ermittelt werden kann, im Display vorzugsweise mittels eines Richtungspfeils, dargestellt wird.

In einer besonders bevorzugten Variante erfolgt die Darstellung des Fahrzeuges, des vordefinierten Messbereiches und der detektierten Hindernisse analog zu ihrer tatsächlichen Ausrichtung. Dies bedeutet, dass im Falle eines vor dem Fahrer vertikal angeordneten Displays die hinter dem Fahrzeug befindlichen Bereiche im unteren Teil und die vor dem Fahrzeug angeordneten Bereiche der Fahrzeugumgebung im oberen Teil des Displays dargestellt werden. Hierdurch entspricht die Ausrichtung des Fahrzeuges zu den Hindernissen den tatsächlichen Bedingungen, so dass die Lage der Hindernisse intuitiv und sehr schnell aus der Darstellung des Displays entnommen werden kann.

In einer weiteren bevorzugten Ausführungsvariante werden der vordefinierte Messbereich und die detektierten Hindernisse in einer vordefinierten Farbe dargestellt. Weiterhin ist es vorgesehen, dass diejenigen Bereiche des vordefinierten Messbereiches, welche aus Sicht des Fahrzeuges hinter einem detektierten Hindernis liegen, in der gleichen vordefinierten Farbe wie das Hindernis dargestellt werden. Durch die unterschiedliche Farbdarstellung, beispielsweise grün für den Messbereich, in welchem sich keine Hindernisse befinden und rot für die Hindernisse und aus Sicht des Fahrzeuges hinter den Hindernissen liegende Bereiche, können die in der Fahrzeugumgebung detektierten Hindernisse besonders gut von der übrigen Fahrzeugumgebung unterschieden werden.

Erfindungsgemäß werden diejenigen Bereiche des vordefinierten Messbereiches, in welchen sich kein Hindernis befindet, welche sich jedoch in unmittelbarer Nähe eines detektierten Hindernisses befinden, in einer vordefinierten Farbe dargestellt, welche sich von der vordefinierten Farbe für die Darstellung des Messbereiches und von der vordefinierten Farbe für die Darstellung der Hindernisse unterscheiden. Hierdurch soll für den Fahrer insbesondere derjenige Bereich andersfarbig markiert beziehungsweise dargestellt werden, welcher in unmittelbarer Nähe zu einem Hindernis steht. Dieser Bereich wird vorzugsweise in gelber Farbe dargestellt. Hierdurch wird dem Fahrer in besonders einfacher und intuitiver Weise vermittelt, dass, sofern sein Fahrzeug sich lediglich in der Nähe des grün dargestellten Bereiches, welcher dem vordefinierten Messbereich ohne ein Hindernis entspricht, befindet, keine Gefahr eines Zusammenstoßes mit einem Hindernis besteht. Befindet sich das Fahrzeug jedoch bereits in einem gelb markierten Farbbereich, ist erhöhte Aufmerksamkeit geboten, da dieser Bereich eine unmittelbare Nähe zu einem im Display dargestellten Hindernis aufweist. Der Abstand derjenigen Bereiche, welche sich in unmittelbarer Nähe eines detektierten Hindernisses befinden und mit einer vordefinierten Farbe (vorzugsweise gelb) dargestellt werden, beträgt vorzugsweise weniger als 0,2 m.

### Kurze Beschreibung der Zeichnungen

Nachstehend wird die Erfindung in einem Ausführungsbeispiel anhand der beigefügten Zeichnungen näher erläutert. Es zeigen:
- Fig. 1: die Darstellung von Informationen zum Einparken nach der Erfindung, wobei sich im vordefinierten Messbereich kein Hindernis befindet;
- Fig. 2 und 3: die Darstellung von Informationen zum Einparken in eine Parklücke bei Annäherung an ein seitlich vor dem Fahrzeug befindliches Hindernis und
- Fig. 4 bis 6: die Darstellung von Informationen zum Einparken in eine Parklücke nach der Erfindung bei Annäherung des Fahrzeuges an ein hinter dem Fahrzeug befindliches Hindernis.

### Bester Weg zur Ausführung der Erfindung

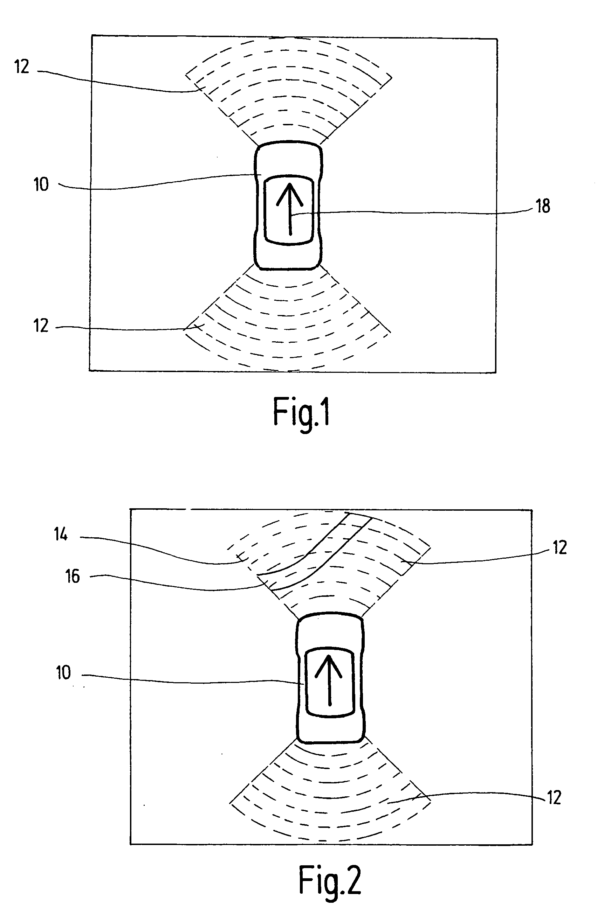

Um den Fahrzeugführer eines Fahrzeuges in besonders geeigneter Weise über das Vorhandensein möglicher Hindernisse in der Fahrzeugumgebung zu informieren, ist es erfindungsgemäß vorgesehen, innerhalb vordefinierter Messbereiche mögliche Hindernisse zu detektieren. Um den Fahrer in besonders geeigneter Weise über das Vorhandensein beziehungsweise das Nichtvorhandensein solcher Hindernisse zu informieren, ist es erfindungsgemäß vorgesehen, während der Detektion von Hindernissen das Fahrzeug und dessen Position in Relation zu bereits detektierten Hindernissen auf einem dem Fahrer zugeordneten Display darzustellen, wobei das Verhältnis von Fahrzeuglänge zum Abstand des Fahrzeuges zu einem Hindernis dem Verhältnis der dargestellten Fahrzeuglänge zum dargestellten Abstand des dargestellten Fahrzeuges 10 zum dargestellten Hindernis 14 entspricht. Dazu wird, wie in Fig. 1 dargestellt, das Fahrzeug 10 sowie dessen Fahrtrichtung 18 auf einem dem Fahrer zugeordneten Display dargestellt. Weiterhin werden die von den Fahrzeugsensoren erfassten Messbereiche 12 vor und hinter dem Fahrzeug dargestellt. Die Messbereiche 12 werden in grüner Farbe dargestellt, sofern kein Hindernis innerhalb des/der Messbereiche/s 12 detektiert wird. Die grüne Farbe signalisiert somit dem Fahrzeugführer, dass keine Hindernisse innerhalb der Messbereiche 12 vorhanden sind.

Nähert sich das Fahrzeug einem Hindernis (Fig. 2), wird auf dem Display sowohl das Fahrzeug 10 als auch das detektierte Hindernis 14 maßstabsgetreu dargestellt. Dabei ist es vorgesehen, dass der Bereich des dargestellten Hindernisses 14 in roter Farbe, der Bereich des dargestellten Messbereiches 12, in welchem sich kein Hindernis befindet, in grüner Farbe, und der Bereich 16 in unmittelbarer Nähe des Hindernisses 14 in gelber Farbe dargestellt wird.

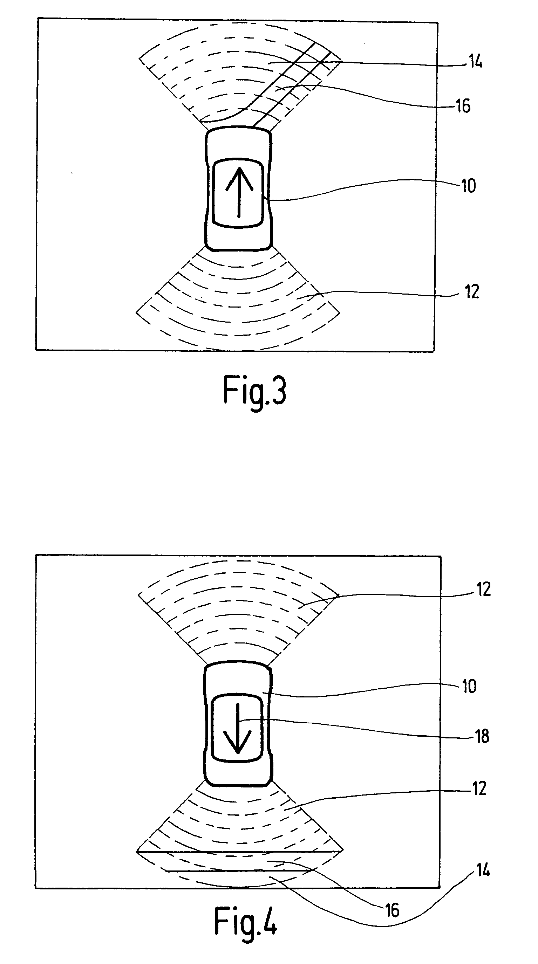

Hierdurch wird es - wie in Fig. 3 schematisch dargestellt - für den Fahrzeugführer aufgrund der Tatsache, dass sich das dargestellte Fahrzeug 10 bereits im Bereich 16 befindet, welcher in gelber Farbe dargestellt ist, offensichtlich, dass ein weiteres Vorwärtsfahren zu einer Kollision des Fahrzeuges mit dem Hindernis führen wird.

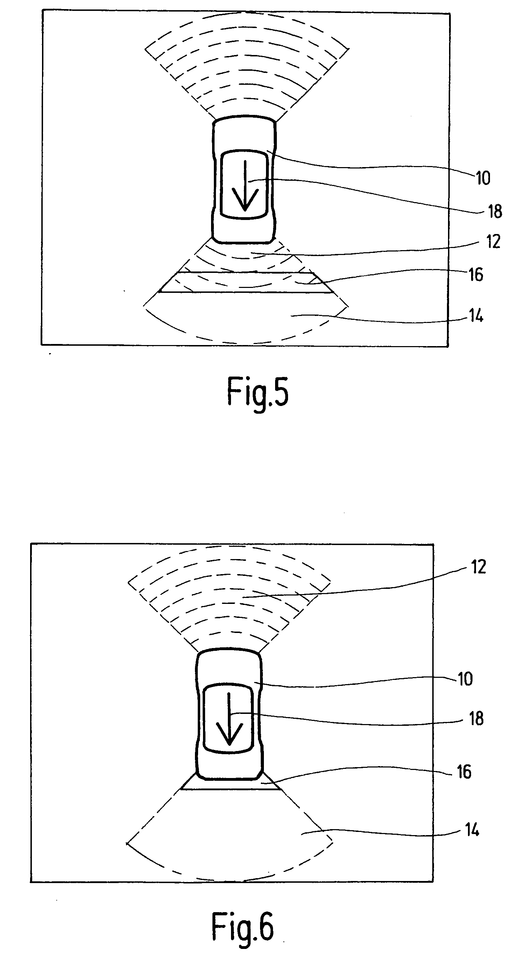

In den Fig. 4 bis 6 ist schematisch die rückwärtige Annäherung des Fahrzeuges 10 an das Hindernis 14 dargestellt. Bereits in einigem Abstand, wird das Hindernis 14 bereits von den Sensoren des Fahrzeuges detektiert und im Display dargestellt (Fig. 4). Aufgrund der maßstabsgetreuen Darstellung sowie der unterschiedlichen Farbwahl für das dargestellte, detektierte Hindernis 14 (rot), den Bereich 16 in unmittelbarer Nähe des Hindernisses (gelb) sowie den sonstigen Messbereich 12 (grün) ist es für den Fahrer sofort erkennbar, ob und wie weit er mit dem Fahrzeug noch rückwärts fahren kann, bis es zu einer Kollision mit dem Hindernis kommen wird. Dabei befindet sich das dargestellte Fahrzeug 10 - wie in Fig. 6 dargestellt ist - unmittelbar vor einem rückwärtig angeordneten Hindernis 14. Dies bedeutet, dass sich das Fahrzeug ebenfalls direkt vor dem realen (rückwärtig befindlichen) Fahrzeug befindet. Aufgrund der maßstabsgetreuen Darstellung und der farblichen Markierung (gelbe Farbe) des Bereiches in unmittelbarer Nähe eines Hindernisses kann der Fahrzeugführer relativ schnell und direkt an das Hindernis heranfahren, ohne eine Kollision zu riskieren. So ist der Fahrzeugführer im Ausführungsbeispiel nach Fig. 5 bereits aufgrund der Tatsache, dass der Bereich 16 (gelb) am Heck des dargestellten Fahrzeuges 10 dargestellt ist, in ausreichender Weise darüber informiert, dass sich das Fahrzeug in unmittelbarer Nähe zum rückwärtigen Hindernis befindet.

Weiterhin ist es erfindungsgemäß vorgesehen, die Helligkeit des Displays in Abhängigkeit vom Umgebungslichtanteil zu steuern. So kann beispielsweise eine Tages- sowie eine Nachtbeleuchtung vorgesehen sein, wobei die Nachtbeleuchtung des Displays eine geringere Helligkeit aufweist, welche aufgrund des nicht vorhandenen Tageslichtes zu einer Darstellung der Fahrzeugumgebung ausreicht. Weiterhin ist es vorgesehen, dass der Fahrzeugführer über ein Eingabemodul die Helligkeit des Displays einstellen kann. Weiterhin ist es vorgesehen, dass die Farben zur Darstellung von detektierten Hindernissen 14, des Bereiches 16 in unmittelbarer Nähe eines Hindernisses 14 sowie des übrigen Messbereiches 12 frei wählbar und einstellbar sind.

## Patentansprüche

1. Verfahren zum Bereitstellen von Informationen für einen Fahrzeugführer zum Einparken, z.B. in eine Parklücke durch Detektieren von innerhalb eines vordefinierten Messbereiches befindlichen Hindernissen und Bestimmung der Fahrzeugposition in Relation zum Hindernis oder zu den Hindernissen, wobei während der Detektion von Hindernissen das Fahrzeug und dessen Position in Relation zu bereits detektierten Hindernissen auf einem dem Fahrer zugeordneten Display dargestellt wird, wobei das Verhältnis von Fahrzeuglänge zum Abstand des Fahrzeuges zu einem Hindernis dem Verhältnis der dargestellten Fahrzeuglänge zum dargestellten Abstand des dargestellten Fahrzeuges (10) zum dargestellten Hindernis (14) entspricht oder im Wesentlichen entspricht, **dadurch gekennzeichnet, dass** diejenigen Bereiche (16) des vordefinierten Messbereiches (12) in unmittelbarer Nähe eines detektierten Hindernisses (14) in einer vordefinierten Farbe dargestellt werden, welche sich von der vordefinierten Farbe für die Darstellung eines Messbereiches (12) und von der vordefinierten Farbe für die Darstellung eines Hindernisses (14) unterscheidet.

2. Verfahren nach Anspruch 1, **dadurch gekennzeichnet, dass** das Fahrzeug, der vordefinierte Messbereich der dem Fahrzeug zugeordneten Sensoren und bereits detektierte Hindernisse in einer senkrechten Aufsicht dargestellt werden.

3. Verfahren nach einem der vorhergehenden Ansprüche, **dadurch gekennzeichnet, dass** die tatsächliche Fahrtrichtung (abhängig vom eingelegten Gang) und/oder die tatsächliche Rollrichtung des Fahrzeuges dargestellt wird.

4. Verfahren nach einem der vorhergehenden Ansprüche, **dadurch gekennzeichnet, dass** die Darstellung des Fahrzeuges (10), des vordefinierten Messbereiches (12) und der detektierten Hindernisse (14) analog zu ihrer tatsächlichen Ausrichtung erfolgt.

5. Verfahren nach einem der vorhergehenden Ansprüche, **dadurch gekennzeichnet, dass** diejenigen Bereiche des vordefinierten Messbereiches (12), welche aus Sicht des Fahrzeuges hinter einem detektierten Hindernis liegen, in der gleichen vordefinierten Farbe wie das Hindernis (14) dargestellt werden.

6. Verfahren nach einem der vorhergehenden Ansprüche, **dadurch gekennzeichnet, dass** der Abstand derjenigen Messbereiche (16), welche sich in unmittelbarer Nähe eines detektierten Hindernisses (14) befinden, weniger als 0,2 m beträgt.

## Claims

1. Method for providing information for the driver of a vehicle for parking, for example, in a parking space by detecting obstacles which are located within a predefined measuring range and determining the position of the vehicle in relation to the obstacle or the obstacles, wherein, during the detection of obstacles, the vehicle and its position in relation to obstacles which have already been detected are displayed on a display which is assigned to the driver, wherein the relationship of the length of the vehicle with respect to the distance of the vehicle from an obstacle corresponds, or essentially corresponds, to the relationship of the displayed length of the vehicle with respect to the displayed distance of the displayed vehicle (10) from the displayed obstacle (14), **characterized in that** those areas (16) of the predefined measuring range (12) which are in the direct vicinity of a detected obstacle (14) are displayed in a predefined colour which differs from the predefined colour for the display of a measuring range (12) and from the predefined colour for the display of an obstacle (14).

2. Method according to Claim 1, **characterized in that** the vehicle, the predefined measuring range of the sensors which are assigned to the vehicle and obstacles which have already been detected are displayed in a vertical plan view.

3. Method according to one of the preceding claims, **characterized in that** the actual direction of travel (irrespective of the selected gear speed) and/or the actual rolling direction of the vehicle are displayed.

4. Method according to one of the preceding claims, **characterized in that** the vehicle (10), the predefined measuring range (12) and the detected obstacles (14) are displayed in a way which is analogous to their actual orientation.

5. Method according to one of the preceding claims, **characterized in that** those areas of the predefined measuring range (12) which lie behind a detected obstacle from the point of view of the vehicle are displayed in the same predefined colour as the obstacle (14).

6. Method according to one of the preceding claims, **characterized in that** the distance between those measuring ranges (16) which are in the direct vicinity of a detected obstacle (14) is less than 0.2 m.

## Revendications

1. Procédé pour fournir des informations à un conducteur de véhicule pour se garer, par exemple dans une emplacement de stationnement, par détection des obstacles se trouvant dans une plage de mesure prédéfinie et pour déterminer la position du véhicule en relation avec l'obstacle ou les obstacles, selon lequel, pendant la détection des obstacles on représente le véhicule et sa position en relation avec des obstacles déjà détectés sur un afficheur associé au conducteur,
le rapport entre la longueur du véhicule et la distance entre le véhicule et un obstacle correspond au moins pratiquement au rapport de la longueur du véhicule représenté et la distance représentée du véhicule représenté (10) par rapport à l'obstacle représenté (14),
**caractérisé en ce que**
les plages (16) de la plage de mesure (12) prédéfinie sont représentées au voisinage immédiat d'un obstacle détecté (14) dans une couleur prédéfinie, qui diffère de la couleur prédéfinie pour la représentation d'une plage de mesure (12) et de la couleur prédéfinie pour la représentation d'un obstacle (14).

2. Procédé selon la revendication 1,
**caractérisé en ce qu'**
on représente le véhicule, la plage de mesure prédéfinie des capteurs associés au véhicule et les obstacles déjà détectés dans une vue en plan.

3. Procédé selon l'une des revendications précédentes,
**caractérisé en ce qu'**
on représente la direction de déplacement effective (en fonction du rapport de vitesses utilisé) et/ou la direction de roulement effective du véhicule.

4. Procédé selon l'une des revendications précédentes,
**caractérisé en ce qu'**
on représente le véhicule (10), la plage de mesure prédéfinie (12) et les obstacles déjà détectés (14) de façon analogue à leur alignement effectif.

5. Procédé selon l'une des revendications précédentes,
**caractérisé en ce qu'**
on représente les plages de la plage de mesure prédéfinie (12) qui se situent derrière l'obstacle détecté selon la vue faite à partir du véhicule, dans la même couleur prédéfinie que l'obstacle (14).

6. Procédé selon l'une des revendications précédentes,
**caractérisé en ce que**
la distance des plages de mesure (16) qui se trouvent au voisinage immédiat d'un obstacle détecté (12) est inférieure à 0,2 m.
